# EUROPÄISCHE PATENTSCHRIFT

(11) **EP 1 035 723 B1**
(45) Veröffentlichungstag und Bekanntmachung des Hinweises auf die Patenterteilung: **01.12.2004**
(21) Anmeldenummer: 00101963.7
(22) Anmeldetag: 01.02.2000
(51) Int. Cl.: H04M 15/00, H04Q 3/00

(54) **Vorrichtung und Verfahren zur Vergebührung von Diensten in einem intelligenten Netzwerk**
Device and method for billing services in an intelligent network
Dispositif et procédure de facturation des services dans un réseau intelligent

(30) Priorität: 11.02.1999 DE 19905728
(43) Veröffentlichungstag der Anmeldung: 13.09.2000
(73) Patentinhaber: SIEMENS AKTIENGESELLSCHAFT, 80333 München (DE)
(72) Erfinder: Kramer, Harald, 82152 Krailling (DE)

(56) Entgegenhaltungen:
- EP-A- 0 706 123
- KU B S: "A reuse-driven approach for rapid telephone service creation" SOFTWARE REUSE: ADVANCES IN SOFTWARE REUSABILITY, 1994. PROCEEDINGS., THIRD INTERNATIONAL CONFERENCE ON RIO DE JANEIRO, BRAZIL 1-4 NOV. 1994, LOS ALAMITOS, CA, USA,IEEE COMPUT. SOC, 1. November 1994 (1994-11-01), Seiten 64-72, XP010125344 ISBN: 0-8186-6632-3
- ITU-T: "Global functional plane for intelligent network Capability Set 2" ITU-T Q.1223, [Online] September 1997 (1997-09), XP002246144 Gefunden im Internet: <URL:http://support.zbinfo.net/teleinfo/it ut/q/Q123E.doc> [gefunden am 2003-07-02]
- ETSI: "Digital cellular telecommunications system (phase 2+); Customized Applications for Mobile network Enhanced Logic (CAMEL); Stage 2 (GSM 03.78 version 5.6.0 Release 1996)" TS 101 044 V5.6.0 (1998-11), November 1998 (1998-11), XP002246145

## Beschreibung

Die Erfindung bezieht sich auf eine Vorrichtung und ein Verfahren zur Vergebührung von Diensten in einem intelligenten Netzwerk und insbesondere auf die Vergebührung von sogenannten IN-Diensten/Dienstmerkmalen (value added services /features).

Die Vergebührung bzw. Gebührenerfassung in herkömmlichen Telekommunikations-Netzwerken erfolgt üblicherweise rufzeitbezogen nach der Methode der Zeitimpulszählung. Diese rufzeitbezogene Vergebührung erfolgt in öffentlichen Vermittlungssystemen beispielsweise durch Zuordnen eines Zähltaktes und nachfolgendes Speichern der ermittelten Zählimpulse. Neben dieser rufzeitbezogenen Vergebührung existiert ferner eine Gebührenerfassung gemäß dem sogenannten "toll-ticketing", wobei Gesprächsdaten in Form von "tickets" erfaßt werden. Diese "tickets" (Call Detail Records, CDR) werden anschließend ausgewertet und dadurch eine Vergebührung für die jeweiligen Gespräche ermittelt. Die Gebührenerfassung bzw. Vergebührung in herkömmlichen Telekommunikations-Netzwerken erfolgt somit ausschließlich nach quantitativen Aspekten, wobei insbesondere eine Zeitdauer, eine Entfernung sowie eine verwendete Bitrate berücksichtigt werden.

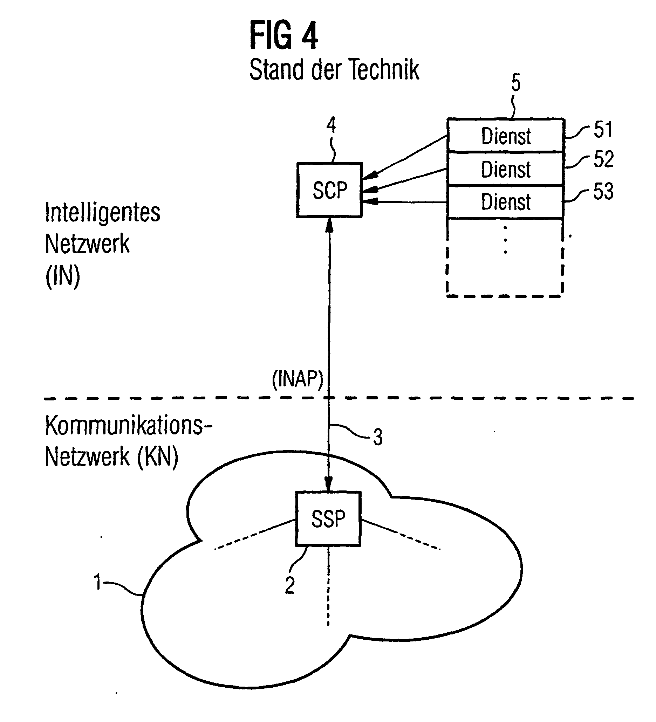

Figur 4 zeigt eine vereinfachte Darstellung eines Telekommunikations-Netzwerks gemäß dem Stand der Technik, das aus einem Basisnetz bzw. Kommunikationsnetzwerk 1 und einem übergeordneten intelligenten Netzwerk (Intelligent Network, IN) besteht. Das Kommunikationsnetzwerk 1 stellt hierbei ein herkömmliches Vermittlungsnetzwerk dar, wie z. B. ein analoges öffentliches Vermittlungssystem (Public Switched Telecommunication Network, PSTN) oder ein digitales öffentliches Vermittlungssystem (Integrated Services Digital Network, ISDN).

Network, ISDN). In Figur 4 bezeichnet das Bezugszeichen 2 einen Dienste-Vermittlungsknoten (Service Switching Point, SSP), der sich üblicherweise in einer oder mehreren von Vermittlungsstellen im Kommunikationsnetzwerk 1 befindet. Das Kommunikationsnetzwerk 1 realisiert insbesondere die reine Vermittlung (Signalisierung), die Übertragung der Gesprächsdaten sowie die quantitative Gebührendatenerfassung. Dem Kommunikationsnetzwerk 1 zugeordnet ist ein intelligentes Netzwerk (Intelligent Network, IN), welches sogenannte IN-Dienste bzw. IN-Dienstmerkmale bereithält. Derartige IN-Dienste werden auch als Mehrwertdienste bezeichnet und weisen beispielsweise die Dienste "free phone", "premium rate", "universal number" und "tele voting" auf. Diese IN-Dienste bzw. IN-Dienstmerkmale werden beispielsweise in einer Speichereinheit 5 im intelligenten Netzwerk abgelegt und können in einen (nicht dargestellten) Arbeitsspeicher der Dienste-Verarbeitungseinheit 4 (Service Control Point, SCP) geladen und verarbeitet werden. Zur Verbindung zwischen dem intelligenten Netzwerk und dem Kommunikationsnetzwerk 1 existiert üblicherweise eine Schnittstelle 3, die als standardisiertes Protokoll die Daten zwischen den logisch getrennten Netzwerken überträgt. Üblicherweise wird für diese Schnittstelle 3 das standardisierte Protokoll INAP (Intelligent Network Applications Protocol) verwendet. Ein IN Dienst besteht aus mindestens einer sogenannten "Service Logic". Wie beispielsweise aus dem Standard TS 101 044 / GSM 03.78 "Customized Applications for Mobile network Enhanced Logic (CAMEL); Stage 2", V 5.6.0 zu entnehmen ist, wird die Service Logic mit einem sogennanten "Service-Key" gekennzeichnet, der eindeutig den angeforderten Dienst identifiziert.

Bei der Vergebührung bzw. Gebührenerfassung von herkömmlichen IN-Diensten (free phone, premium rate, u. s. w.), die beispielsweise als Dienst 51, 52, 53 u. s. w. in der Speichereinheit 5 abgelegt sind, wird das Prinzip der rufzeitbezogenen Gebührendatenerfassung grundsätzlich beibehalten. Genauer gesagt findet die Gebührendatenerfassung weiterhin im Kommunikationsnetzwerk 1 statt, wobei jedoch die Dienste-Verarbeitungseinheit 4 (Service Control Point, SCP) durch geeignete Mechanismen die Gebührendatenerfassung im Dienste-Vermittlungsknoten (Service Switching Point, SSP) des Kommunikationsnetzwerks 1 beeinflußt. Eine derartige Beeinflussung findet beispielsweise über geeignete Befehle in der Schnittstelle 3 (INAP) statt.

Darüber hinaus werden derzeit zusätzliche Dienste in öffentlichen Vermittlungssystemen (wie z. B. "Call Forwarding", d.h. Anrufweiterschaltung im ISDN) vielfach durch zusätzliche Pauschalgebühren gegenüber einem Benutzer abgerechnet.

Eine derartige herkömmliche Vergebührung von Diensten in einem Telekommunikations-Netzwerk besitzt daher eine nur eingeschränkte Flexibilität und ermöglicht insbesondere keine Gebührenerfassung von Diensten in einem intelligenten Netzwerk, d.h. IN-Diensten bzw. IN-Dienstmerkmalen, nach qualitativen Aspekten.

Der Erfindung liegt daher die Aufgabe zugrunde, eine Vorrichtung und ein Verfahren zur Vergebührung von Diensten in einem intelligenten Netzwerk nach qualitativen Aspekten zu schaffen.

Erfindungsgemäß ist diese Aufgabe hinsichtlich der Vorrichtung durch die Merkmale des Patentanspruchs 1 und hinsichtlich des Verfahrens durch die Maßnahmen des Patentanspruchs 11 gelöst.

Vorzugsweise besitzt jeder Dienst ein Dienstkennzeichen zum Kennzeichnen einer Dienstart, wobei ein Dienstkennzeichen-Detektor das jeweilige Dienstkennzeichen bei einer Verarbeitung des dazugehörigen Dienstes erfaßt und eine Auswerteeinheit die erfaßten Dienstkennzeichen zur Vergebührung auswertet. Auf diese Weise ergibt sich eine hochflexible Vergebührung nach rein qualitativen Aspekten, da ausschießlich die jeweils verarbeiteten Dienste, d.h. die tatsächlich in Anspruch genommenen Dienste, einem Benutzer verrechnet werden.

Vorzugsweise sind die jeweiligen Dienste in einer Dienste-Hierarchie entsprechend einem Baukastenprinzip abgelegt, wodurch sich übergeordnete Dienste aus bereits existierenden untergeordneten Diensten (Elementardiensten) zusammenfügen lassen. Insbesondere bei komplexen Diensten ergibt sich daraus der Vorteil, daß ihr Aufbau vereinfacht ist und nicht benutzte Dienstbereiche nicht vergebührt werden.

Ferner kann die Verarbeitung der Dienste in der Diensteverarbeitungseinheit in Abhängigkeit von dem Ergebnis der Auswerteeinheit gesteuert werden, wodurch sich eine Echtzeit-Vergebührung (real time/online) realisieren läßt. Dies ist insbesondere für vorausbezahlte (pre-paid) Dienste von Bedeutung.

In den Unteransprüchen sind vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
Figur 1 eine schematische Darstellung einer erfindungsgemäßen Vorrichtung zur Vergebührung von Diensten in einem intelligenten Netzwerk;
Figur 2a) bis 2c) schematische Darstellungen von hierarchisch geordneten Diensten;
Figur 3 eine schematische Darstellung eines zu verarbeitenden komplexen Dienstes; und
Figur 4 eine vereinfachte Darstellung eines Telekommunikations-Netzwerks gemäß dem Stand der Technik.

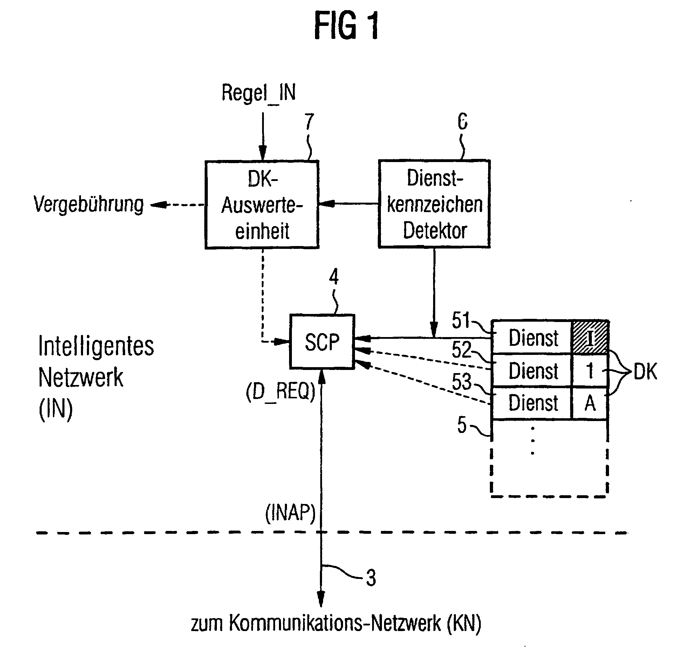

In Figur 1 bezeichnen gleiche Bezugszeichen gleiche oder ähnliche Bauteile wie in der Darstellung gemäß Figur 4, weshalb auf eine detaillierte Beschreibung ihrer Funktionen nachfolgend verzichtet wird.

Das Bezugszeichen 4 bezeichnet eine Dienste-Verarbeitungseinheit, wie sie beispielsweise als Dienst-Steuerknoten (Service Control Point, SCP) in einem intelligenten Netzwerk vorliegt. Die Dienste-Verarbeitungseinheit 4 ist über eine dazugehörige Schnittstelle 3 mit einer nicht dargestellten Dienste-Vermittlungsstelle (Service Switching Point, SSP) im darunterliegenden Kommunikationsnetzwerkverbunden. Zur Übertragung der Daten zwischen dem intelligenten Netzwerk (Intelligent Network, IN) und dem Basisnetz bzw. Kommunikationsnetzwerk 1 (KN) wird das standardisierte Protokoll INAP (Intelligent Network Applications Protocol) verwendet. In einer Speichereinheit 5 sind eine Vielzahl von Diensten 51, 52, 53, ... abgelegt, die von einem Benutzer angefordert werden können. Die in der Speichereinheit 5 abgelegten Dienste bzw. Dienstmerkmale bestehen vorzugsweise aus einem ausführbaren Programmcode, der mehr oder weniger komplexe IN-Dienste bzw. IN-Dienstmerkmale realisiert.

Derartige Dienste können beispielsweise Programme zur Formatkonvertierung sein, bei denen z.B. Text in Sprache umgewandelt wird. Ferner könnte dies ein sog. "voice activated dialing" Dienst sein, bei dem ein Verbindungsaufbau sprachgesteuert abläuft. Hierbei werden komplexe Dienste oftmals durch (nicht dargestellte) spezialisierte Hardware (Specialized Resource Point, SRP) erbracht, die über die Dienste-Verarbeitungseinheit 4 (Service Control Point, SCP) angesteuert wird. Die komplexen Dienste bzw. Dienstmerkmale können jedoch auch verteilt durch eine Vielzahl von Dienste-Verarbeitungseinheiten 4 (Service Control Point, SCP) oder einer Kombination von spezialisierter Hardware (Specialized Resource Point, SRP) und Dienste-Verarbeitungseinheiten 4 (Service Control Point, SCP) realisiert werden.

Weitere denkbare komplexe Dienste bzw. Dienstmerkmale, die eine gewisse Relevanz für die Vergebührung darstellen, sind z. B.:
Zugriff auf Routing-Daten für effizientes Routing (number portability service);
Benutzung hochwertiger Ressourcen (unified messaging service);
Präsentation von Informationen in einem bestimmten Format (Sprache, Daten, Bild, ...);
Protokollkonvertierung;
Ausführung bestimmter Leistungsmerkmale (security features, interworking features);
Zugriff auf interne oder externe Datenbasen (calling card services);
Berücksichtigung bestimmter Merkmale des Netzzugangs (des verwendeten Endgerätes);
Sicherstellung einer bestimmten definierten Dienstequalität (quality of service, QoS), Verfügbarkeit.

Wesentlich für die vorliegende Erfindung sind ein in Figur 1 mit dem Bezugszeichen 6 gekennzeichneter Dienstkennzeichen-Detektor sowie eine Dienstkennzeichen-Auswerteeinheit 7, deren Funktionsweise nachfolgend im einzelnen beschrieben wird.

Zur Kennzeichnung der verschiedensten Arten von vorstehend beschriebenen Diensten bzw. Dienstmerkmalen im intelligenten Netzwerk besitzt jeder dieser Dienste zumindest ein Dienstkennzeichen DK. Dieses Dienstkennzeichen DK bestimmt eindeutig die Art eines verwendeten Dienstes. Bei einem Laden z.B. des Dienstes 51 kann nunmehr der Dienstkennzeichen-Detektor 6 das dem Dienst 51 zugeordnete Dienstkennzeichen DK (I) erfassen und der Dienstkennzeichen-Auswerteeinheit 7 übermitteln. Die Dienstkennzeichen-Auswerteeinheit 7 kann somit das erfaßte Dienstkennzeichen DK (I) des geladenen Dienstes 51 bewerten und hieraus eine jeweilige Vergebührung bzw. Gebührenabrechnung ermitteln. Alternativ kann das Dienstkennzeichen DK des Dienstes 51 auch erst bei der Verarbeitung in der Dienste-Verarbeitungseinheit 4 vom Dienstkennzeichen-Detektor 6 erfaßt werden, wodurch sich eine qualitative Genauigkeit für die Vergebührung des verarbeiteten Dienstes weiter erhöhen läßt. Die Auswertung in der Dienstkennzeichen-Auswerteeinheit 7 kann beispielsweise nach einer (nicht dargestellten) intern Auswertetabelle oder in Abhängigkeit von einer extern zugeführten Auswerteregel Regel_IN erfolgen.

Demzufolge kann die Dienstkennzeichen-Auswerteeinheit 7 eine Vergebührung der angeforderten Dienste in Abhängigkeit von einer zugeordneten Vergebührungsrelevanz eines verarbeiteten Dienstes und/oder einer bestimmten Anzahl von verarbeiteten Diensten bestimmen. Ferner kann die Auswertung in Abhängigkeit von einem jeweiligen Benutzer erfolgen, wodurch besonders flexible Preisgestaltungen möglich werden. Zusätzlich kann eine Datums- und/oder Tageszeit in die Auswertung mit einbezogen werden. In gleicher Weise kann eine jeweils verwendete Übertragungstechnik oder ein sonstiges Auswertekriterium im Zusammenhang mit den erfaßten Dienstkennzeichen DK gebracht werden.

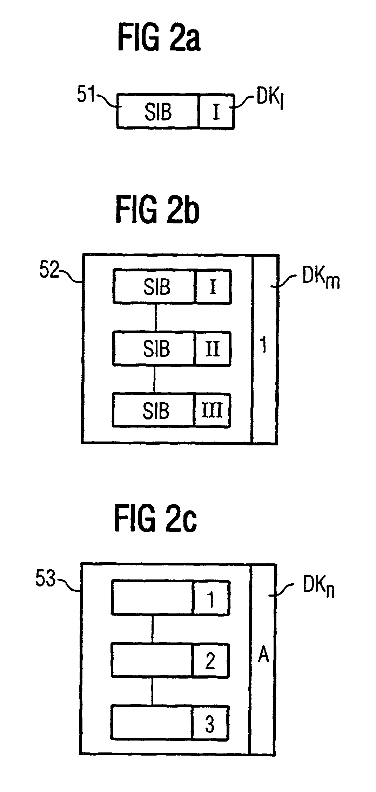

Die Figuren 2a) bis 2c) zeigen beispielhafte IN-Dienste 51, 52 und 53, wie sie beispielsweise in der Speichereinheit 5 gemäß Figur 1 abgespeichert werden können. Gemäß Figur 2a) besteht der Dienst 51 aus einem diensteunabhängigen Elementarbaustein bzw. Elementarprogrammcode (Service Independent Building Block, SIB), der einen Grundbaustein in einer nicht dargestellten Dienste-Bibliothek darstellt. Eine Vielzahl derartiger diensteunabhängiger Elementarbausteine 51 stellen somit die unterste Ebene in einer hierarchischen Dienstestruktur dar. Vorzugsweise sind die in der gleichen Dienste-Hierarchieebene vorkommenden Dienstkennzeichen DKl fortlaufend numeriert (I, II, III, ...). Die diensteunabhängigen Elementarbausteine (SIB) können bereits voll funktionsfähige Dienste darstellen.

Figur 2b) zeigt einen übergeordneten Dienst 52 der beispielsweise aus drei diensteunabhängigen Elementarbausteinen (SIB) besteht. Der Dienst 52 besitzt demnach ein eigenes (übergeordnetes) Dienstkennzeichen DKm sowie zusätzlich die drei Dienstkennzeichen DKl der untergeordneten Elementarbausteine (I, II, III).

In gleicher Weise besteht der Dienst 53 aus drei Diensten einer untergeordneten Hierarchieebene mit den Dienstkennzeichen DKm = 1,2,3. Ferner besitzt der Dienst 53 sein eigenes Dienstkennzeichen DKn = A. Durch die Verwendung hierarchisch geordneter Dienstkennzeichen (I, 1, A) ergibt sich eine vereinfachte Auswertung für die Auswerteeinheit 7 bei gleichbleibender Flexibilität für die zu erstellenden bzw. zu verarbeitenden Dienste.

Die Dienstkennzeichen DK können beispielsweise als "flags" an vorbestimmten Stellen des Dienst-Programmcodes abgelegt werden. Vorzugsweise befinden sie sich in einem Anfangsbereich des Dienst-Programmcodes, wodurch insbesondere eine später beschriebene "online"-Steuerung der Dienste-Verarbeitungseinheit 4 verbessert wird.

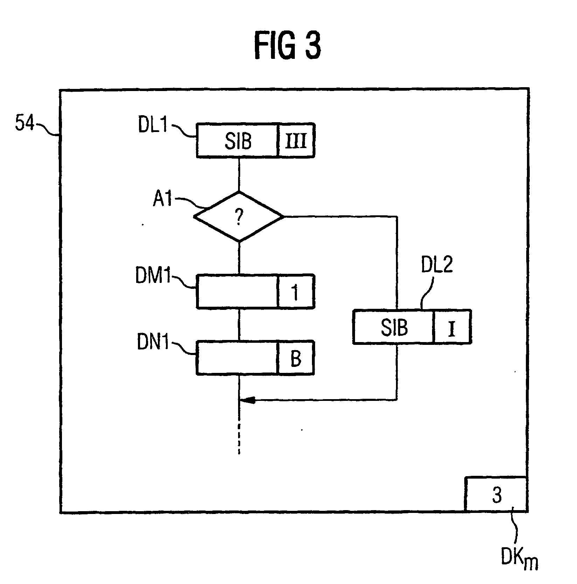

Zur Veranschaulichung dieser vereinfachten Vergebührung bei gleichzeitiger Erhöhung der Flexibilität ist in Figur 3 ein komplexer Dienst 54 dargestellt, der aus einer Vielzahl von unterschiedlichen Diensten besteht. Demzufolge kann der Dienst 54 aus einem Elementarbaustein DL1 (SIB) mit dem Dienstkennzeichen III bestehen, der beispielsweise eine Initialisierungsphase des komplexen Dienstes 54 beinhaltet. Das Bezugszeichen A1 bezeichnet einen Abfrageschritt, bei dem bestimmte diensterelevante Abfragen durchgeführt werden. Der Abfrageschritt A1 kann beispielsweise ein speziell geschriebener Programmcode (full custom) oder ein bereits existierender Dienstbaustein sein. In Abhängigkeit vom Ergebnis der Abfrage A1 verzweigt der Dienst entweder in einen weiteren Elementarbaustein DL2 (SIB) mit dem Dienstkennzeichen I oder zu einem Dienst DM1 mit dem Dienstkennzeichen 1, der sich hierarchisch in der gleichen Ebene befindet wie der komplexe Dienst 54 mit seinem Dienstkennzeichen DKm = 3. Nach dem Dienst DM1 wird ein übergeordneter Dienst DN1 mit dem Dienstkennzeichen DKn = B durchgeführt.

Wie sich aus Figur 3 ergibt, kann demzufolge ein Dienst bzw. ein Dienstmerkmal aus einer Vielzahl von untergeordneten, nebengeordneten und/oder übergeordneten Diensten bzw. Dienstmerkmalen bestehen die weiterhin ihre jeweiligen Dienstkennzeichen DKl, DKm, DKn, ... aufweisen.

Nachfolgend wird die Funktionsweise der erfindungsgemäßen Vorrichtung sowie des dazugehörigen Verfahrens anhand des Dienstes 54 gemäß Figur 3 beschrieben.

Der Dienst 54 stellt gemäß Figur 3 einen hochkomplexen Dienst dar, der aus einer Vielzahl von bereits existierenden Dienst-Bausteinen DL1, A1, DM1, DN1 und DL2 zusammengesetzt ist. Zu seiner Kennzeichnung besitzt er das Dienstkennzeichen DKm = 3 und ist in der Speichereinheit 5 als ausführbarer Programmcode abgelegt. Sobald im Basisnetz bzw. Kommunikationsnetzwerk 1 ein Endgeräteteilnehmer den Dienst 54 anfordert, wird dieses vom Dienste-Vermittlungsknoten 2 über die (INAP-) Schnittstelle 3 an die Dienste-Verarbeitungseinheit 4 über eine Dienst-Anforderung (D_REQ) angefordert. Die Dienste-Verarbeitungseinheit (Service Control Point, SCP) 4 wählt daraufhin den entsprechenden Dienst 54 aus der Speichereinheit 5 aus und lädt ihn beispielsweise in seinen Programmspeicher. Anschließend wird der Dienst 54 von der Dienste-Verarbeitungseinheit 4 abgearbeitet, wobei für den Benutzer die entsprechende Dienstanforderung realisiert wird.

Während dem Verarbeiten oder dem Laden des Dienstes 54 erfaßt der Dienstkennzeichen-Detektor 6 die jeweiligen Dienstkennzeichen DK. Genauer gesagt wird beispielsweise mit Abarbeiten des Dienstes DL1 ein Zähler III eingerichtet und sein Wert auf "1" hochgezählt. Ist der Dienst A1 beispielsweise eine Abfrage nach einer erstmaligen Benutzung des Dienstes 54, so werden die Dienste DM 1 und DN1 von der Dienste-Verarbeitungseinheit durchgeführt, wenn der Benutzer den Dienst 54 erstmalig benutzt. Im Dienst DM1 und DN1 könnte beispielsweise eine Erfassungsroutine für den Benutzer abgearbeitet werden, die ihn als erstmaligen Benutzer klassifiziert und vorbestimmte Benutzerdaten aufnimmt. Der Dienstkennzeichen-Detektor 6 generiert in diesem Fall beispielsweise einen Zähler 1 und B und zählt ihre Werte auf "1" hoch. Folglich sind vom Dienstkennzeichen-Detektor 6 die Dienste III, 1, und B mit ihren jeweiligen Zählwerten "1" erfaßt worden. Nach vollständigem Abarbeiten des IN-Dienstes 54 wird ferner ein Zähler 3 im Dienstkennzeichen-Detektor 6 aktiviert und ein dazugehöriger Zählwert auf "1" inkrementiert.

Auf diese Weise erfaßt der Dienst-Kennzeichendetektor 6 die Dienstkennzeichen III, 1, B und 3 mit ihren jeweiligen Zählwertden "1", während der nicht verarbeitete Dienst DL2 (SIB,I) unberücksichtigt bleibt. Die erfaßten Dienstkennzeichen DKx (x = l, m, n, ...) mit ihren dazugehörigen Zählwerten werden anschließend der Dienstkennzeichen-Auswerteeinheit 7 zur Bewertung übermittelt. Die Bewertung erfolgt hierbei in Abhängigkeit von der bereits abgespeicherten (nicht dargestellten) Auswertetabelle und/oder der von außen zugeführten Auswerteregel Regel_IN. Eine derartige Auswertetabelle könnte beispielsweise für das Dienstkennzeichen III einen Gebührenwert 0 festlegen, da der entsprechende Elementardienst DL1 für die Vergebührung nicht von Bedeutung ist. Ferner könnte dem Dienstkennzeichen 1 und B ein Gebührenwert X zugeordnet sein, wodurch sich zunächst der Gesamtgebührenwert 2X für eine erstmalige Benutzung des Dienstes 54 ergibt. Vorzugsweise stimmt dieser Summengebührenwert mit einem entsprechenden Gebührenwert Y des Dienstkennzeichens DKm = 3 überein.

Er kann jedoch auch davon abweichen, wenn beispielsweise für die zweite Benutzung des IN-Dienstes 54 durch den gleichen Benutzer bei der Abfrage A1 zum Dienst DL2 verzweigt wird und dessen Dienstkennzeichen DKl = I vom Dienstkennzeichen-Detektor 6 erfaßt wird. In diesem Fall erfaßt der Dienstkennzeichen-Detektor 6 lediglich die Dienstkennzeichen III, I und 3 und übermittelt diese an die Dienstkennzeichen-Auswerteeinheit 7. Für den Fall, daß die Elementardienste DL1 und DL2 in einer entsprechenden Auswertetabelle als nicht vergebührungsrelevante Dienste aufgeführt sind (d.h. Gebührenwert 0), ergibt sich der zu verrechnende Gebührenwert für den IN-Dienst 54 lediglich aus dem Gebührenwert des Dienstkennzeichens 3.

Auf diese Weise läßt sich eine äußerst flexible und einfach auszuwertende Vergebührung von unterschiedlichen Diensten realiseren, wobei die jeweiligen Dienste nach Art eines Baukastensystems zusammengestellt werden können.

Die vorstehend beschriebene qualitative Vergebührung von Diensten im intelligenten Netzwerk kann vorzugsweise zusätzlich zur rufzeitbezogenen Gebührendatenerfassung im Dienste-Vermittlungsknoten (SSP) 2 des Kommunikationsnetzwerkes 1 durchgeführt werden. Hierbei kann die Vergebührung streng an solchen Aktionen oder Dienstereignissen ausgerichtet werden, die eine vom Dienstanbieter (service provider) festzulegende Vergebührungsrelevanz haben. Die vom Dienstkennzeichen-Detektor 6 erfaßten und zur Dienstkennzeichen-Auswerteeinheit 7 übermittelten Datensätze können zusätzlich als vergebührungsrelevante Dienstereignis-Datensätze (Service Charging Event Records) einer weiteren Nachverarbeitung zugeführt werden.

In bestimmten Fällen steuert die Dienstkennzeichen-Auswerteeinheit 7 die Dienste-Verarbeitungseinheit 4 unmittelbar (, d.h. online,) in Abhängigkeit vom jeweiligen Auswerteergebnis, wodurch sich sogenannte vorausbezahlte (pre-paid) Dienste bzw. Dienstmerkmale realisieren lassen. Hierbei findet zusätzlich ein Vergleich zwischen einem jeweiligen Guthabenkonto und den bereits verbrauchten "Einheiten" für die angewählten Dienste pro Benutzer oder Benutzergruppe statt.

Insbesondere durch Kombination des herkömmlichen rufzeitbezogenen Verfahrens zur Vergebührung bzw. Gebührendatenerfassung mit dem erfindungsgemäßen Verfahren zur Gebührendatenerfassung lassen sich beliebige Vergebührungsstrategien der Netzbetreiber sowie Diensteanbieter realisiern. Dies gilt sowohl für die Vergebührung der Endbenutzer (Endgeräteteilnehmer) als auch für die Vergebührung der Netzbetreiber sowie Diensteanbieter untereinander.

Die Erfindung wurde vorstehend anhand eines analogen oder digitalen Netzes als Kommunikationsnetzwerk 1 beschrieben. Ein derartiges Kommunikationsnetzwerk 1 kann jedoch auch aus einem Mobilfunknetz (Public Land Mobile Network, PLMN), einem Intranet oder dem Internet bestehen, dem ein entsprechendes intelligentes Netzwerk IN zugeordnet ist. Wesentlich ist jedoch die qualitative Vergebührung von Diensten in Abhängigkeit von einem tatsächlich durchgeführten Zugriff auf den jeweiligen Dienst.

## Patentansprüche

1. Vorrichtung zur Vergebührung von Diensten in einem intelligenten Netzwerk mit:
einer Speichereinheit (5) zum Speichern von zumindest einem Dienst (51, 52, 53, ...); und
einer Dienste-Verarbeitungseinheit (4) zum Laden und Verarbeiten eines in der Speichereinheit (5) abgespeicherten Dienstes (51) in Abhängigkeit von einer Dienstanforderung (D_REQ) eines Kommunikations-Netzwerks (1), und
einem Dienstkennzeichen-Detektor (6)
**dadurch gekennzeichnet,**
**daß** der zumindest eine Dienst (51, 52, 53, ...) zumindest ein Dienstkennzeichen (DK) zum Kennzeichnen einer Dienstart aufweist;
der Dienstkennzeichen-Detektor (6) das zumindest eine Dienstkennzeichen (DK) bei einer Verarbeitung des dazugehörigen Dienstes in der Dienste-Verarbeitungseinheit (4) erfaßt; und
eine Dienstkennzeichen-Auswerteeinheit (7) die erfaßten Dienstkennzeichen (DK) zur Vergebührung auswertet.

2. Vorrichtung nach Patentanspruch 1,
**dadurch gekennzeichnet,**
**daß** der zumindest eine Dienst (51, 52, 53, ...) einen ausführbaren Programmcode darstellt.

3. Vorrichtung nach Patentanspruch 1 oder 2,
**dadurch gekennzeichnet,**
**daß** das zumindest eine Dienstkennzeichen (DK) ferner eine Dienste-Hierarchie (I, 1, A, ...) der jeweiligen Dienste (51, 52, 53) zueinander kennzeichnet.

4. Vorrichtung nach Patentanspruch 3,
**dadurch gekennzeichnet,**
**daß** ein in der Dienste-Hierarchie übergeordneter Dienst (53) neben seinem dazugehörigen Dienstkennzeichen (DK) auch untergeordnete Dienstkennzeichen (DKl, DKl, DKm) aufweist.

5. Vorrichtung nach Patentanspruch 3 oder 4,
**dadurch gekennzeichnet,**
**daß** in der untersten Ebene der Dienste-Hierarchie dienstunabhängige Elementarbausteine (SIB) vorliegen.

6. Vorrichtung nach einem der Patenansprüche 1 bis 5,
**dadurch gekennzeichnet,**
**daß** der Dienstkennzeichen-Detektor (6) für jedes Dienstkennzeichen (DKl, DKm, DKn, ...) einen Zähler aufweist und die Dienstkennzeichen-Auswerteeinheit (7) die jeweiligen Zählerstände nach Ausführung des Dienstes auswertet.

7. Vorrichtung nach einem der Patentansprüche 1 bis 6,
**dadurch gekennzeichnet,**
**daß** die Dienstkennzeichen-Auswerteeinheit (7) die erfaßten Dienstkennzeichen (DK) und/oder jeweiligen Zählerstände in Abhängigkeit von einer internen oder externen Auswerteregel (Regel_IN) zur Berechnung des Gebührenwerts verwendet.

8. Vorrichtung nach Patentanspruch 7,
**dadurch gekennzeichnet,**
**daß** die Auswerteregel (Regel_IN) einen jeweiligen Dienstebenutzer für das erfasste Dienstkennzeichen (DK) berücksichtigt.

9. Vorrichtung nach Patentanspruch 7 oder 8,
**dadurch gekennzeichnet,**
**daß** die Auswerteregel (Regel_IN) eine Relevanz des erfassten Dienstkennzeichens (DK) für eine weitere Nachverarbeitung berücksichtigt.

10. Vorrichtung nach einem der Patentansprüche 1 bis 9,
**dadurch gekennzeichnet,**
**daß** die Dienste-Verarbeitungseinheit (4) die Verarbeitung des geladenen Dienstes in Abhängigkeit von einem Auswerteergebnis der Dienstkennzeichen-Auswerteeinheit (7) steuert.

11. Verfahren zur Vergebührung von Diensten in einem intelligenten Netzwerk mit den Schritten:
a) Kennzeichnen und Speichern eines vorbestimmten Dienstes mit einem Dienstkennzeichen (DK) in einer Speichereinheit (5);
b) Anfordern (D_REQ) des vorbestimmten Dienstes im intelligenten Netzwerk;
c) Laden des angeforderten Dienstes aus der Speichereinheit (5);
d) Verarbeiten des geladenen Dienstes in einer Dienste-Verarbeitungseinheit (4);
e) Erfassen des zum verarbeiteten Dienst dazugehörigen Dienstkennzeichens (DK); und
f) Auswerten des erfaßten Dienstkennzeichens (DK) zum Bestimmen einer Vergebührung für den verarbeiteten Dienst.

12. Verfahren nach Patentanspruch 11,
**dadurch gekennzeichnet,**
**daß** das Laden des angeforderten Dienstes ein Laden eines ausführbaren Programmcodes darstellt.

13. Verfahren nach Patentanspruch 11 oder 12,
**dadurch gekennzeichnet,**
**daß** der aus der Speichereinheit (5) geladene Dienst (54) eine Vielzahl von hierarchisch geordneten Unter- (DL1), Neben-(DM1) und/oder Überdiensten (DN1) mit entsprechenden Dienstkennzeichen (DKl, DKm, DKn) aufweist.

14. Verfahren nach einem der Patentansprüche 11 bis 13,
**dadurch gekennzeichnet,**
**daß** das Erfassen der Dienstkennzeichen ein jeweiliges Zählen von gleichen Dienstkennzeichen nach Ausführung des Dienstes darstellt.

15. Verfahren nach Patentanspruch 14,
**dadurch gekennzeichnet,**
**daß** das Auswerten der Dienstkennzeichen ein Bewerten der jeweiligen Zählerstände in Abhängigkeit von internen und/oder externen Auswerteregeln (Regel_IN) zur Berechnung des Gebührenwerts geschieht.

16. Verfahren nach einem der Patentansprüche 11 bis 15, **gekennzeichnet durch** den weiteren Schritt: g) Steuern der Verarbeitung des geladenen Dienstes in Abhängigkeit vom Ergebnis in Schritt f).

## Claims

1. Device for billing for services in an intelligent network having:
a memory unit (5) for storing at least one service (51, 52, 53, ...); and
a service processing unit (4) for loading and processing a service (51), stored in the memory unit (5), as a function of a service request (D_REQ) of a communications network (1), and a service identifier detector (6), **characterized in that** the at least one service (51, 52, 53, ...) has at least one service code (DK) for identifying a type of service;
the service identifier detector (6) which registers at least one service identifier (DK) when the associated service is processed in the service processing unit (4); and a service identifier evaluation unit (7) evaluates the registered service identifiers (DK) for billing purposes.

2. Device according to Patent Claim 1, **characterized in that** the at least one service (51, 52, 53, ...) constitutes an executable program code.

3. Device according to Patent Claim 1 or 2, **characterized in that** the at least one service identifier (DK) also identifies a service hierarchy (I, 1, A, ...) of the respective services (51, 52, 53).

4. Device according to Patent Claim 3, **characterized in that** a superordinate service (53) in the service hierarchy has not only its associated service identifier (DK) but also subordinate service identifiers (DK1, DK1, DKm).

5. Device according to Patent Claim 3 or 4, **characterized in that** service-independent elementary modules (SIB) are present in the lowest level of the service hierarchy.

6. Device according to one of Patent Claims 1 to 5, **characterized in that** the service identifier detector (6) has a counter for each service identifier (DK1, DKm, DKn, ...), and the service identifier evaluation unit (7) evaluates the respective counter states after the service has been executed.

7. Device according to one of Patent Claims 1 to 6, **characterized in that** the service identifier evaluation unit (7) uses the registered service identifiers (DK) and/or respective counter readings as a function of an internal or external evaluation rule (rule_IN) in order to calculate the toll value.

8. Device according to Patent Claim 7, **characterized in that** the evaluation rule (rule_IN) takes into account a respective service user for the registered service identifier (DK).

9. Device according to Patent Claim 7 or 8, **characterized in that** the evaluation rule (rule_IN) takes into account a relevance of the registered service identifier (DK) for further post-processing.

10. Device according to one of Patent Claims 1 to 9, **characterized in that** the service processing unit (4) controls the processing of the loaded service as a function of an evaluation result of the service identifier evaluation unit (7).

11. Method for billing for services in an intelligent network having the steps:
a) a predefined service is identified and stored with a service identifier (DK) in a memory unit (5);
b) predefined service is requested (D_REQ) in the intelligent network;
c) the requested service is loaded out of the memory unit (5);
d) the loaded service is processed in a service processing unit (4);
e) the service identifier (DK) which is associated with the processed service is registered; and
f) the registered service identifier (DK) is evaluated in order to determine a toll for the processed service.

12. Method according to Patent Claim 11, **characterized in that** the loading of the requested service constitutes a loading of an executable program code.

13. Method according to Patent Claim 11 or 12, **characterized in that** the service (54) which is loaded out of the memory unit (5) has a plurality of hierarchically ordered subservices (DL1), secondary services (DM1) and/or superservices (DN1) with corresponding service identifiers (DK1, DKm, DKn).

14. Method according to one of Patent Claims 11 to 13, **characterized in that** the registering of the service identifiers constitutes a respective counting of identical service identifiers after the service has been executed.

15. Method according to Patent Claim 14, **characterized in that** the evaluation of the service identifiers constitutes an evaluation of the respective counter readings as a function of internal and/or external evaluation rules (rule_IN) in order to calculate the toll value.

16. Method according to one of Patent Claims 11 to 15, **characterized by** the further step:
g) the processing of the loaded service is controlled as a function of the result in step f).

## Revendications

1. Dispositif pour la facturation de services dans un réseau intelligent comprenant :
une unité de mémoire (5) pour la mémorisation d'au moins un service (51, 52, 53, ...) ; et
une unité de traitement de services (4) pour le chargement et le traitement d'un service (51) mémorisés dans l'unité de mémoire (5) en fonction d'une demande de service (D_REQ) d'un réseau de communication (1), et un détecteur d'indicateur de service (6)
**caractérisé en ce que**
le au moins un service (51, 52, 53, ...) présente au moins un indicateur de service (DK) pour l'identification d'un type de service ;
le détecteur d'indicateur de service (6) enregistre le au moins un indicateur de service (DK) lors d'un traitement du service concerné dans l'unité de traitement de services (4), et
une unité d'analyse d'indicateur de service (7) analyse les indicateurs de service (DK) enregistrés pour la facturation.

2. Dispositif selon la revendication 1,
**caractérisé en ce que**
le au moins un service (51, 52, 53, ...) représente un code de programme exécutable.

3. Dispositif selon la revendication 1 ou 2,
**caractérisé en ce que**
le au moins un indicateur de service (DK) identifie également une hiérarchie de services (I, 1, A, ...) des services (51, 52, 53, ...) concernés les uns par rapports aux autres.

4. Dispositif selon la revendication 3,
**caractérisé en ce que**
un service (53) prioritaire dans la hiérarchie des services présente en plus de son indicateur de service (DK) spécifique également des indicateurs de service (DKI, DKI, DKm) subordonnés.

5. Dispositif selon la revendication 3 ou 4,
**caractérisé en ce que**
des modules élémentaires (SIB) indépendants du service sont présents au niveau inférieur de la hiérarchie des services.

6. Dispositif selon l'une quelconque des revendications 1 à 5,
**caractérisé en ce que**
le détecteur d'indicateur de service (6) présente un compteur pour chaque indicateur de service (DKI, DKm, DKn, ...) et l'unité d'analyse d'indicateur de service (7) analyse les relevés de compteurs respectifs après l'exécution du service.

7. Dispositif selon l'une quelconque des revendications 1 à 6,
**caractérisé en ce que**
l'unité d'analyse d'indicateur de service (7) utilise les indicateurs de service (DK) enregistrés et/ou les relevés de compteurs respectifs en fonction d'une règle d'analyse (Règle_IN) interne ou externe pour le calcul de la valeur de taxe.

8. Dispositif selon la revendication 7,
**caractérisé en ce que**
la règle d'analyse (Règle_IN) prend en compte un utilisateur de services concerné pour l'indicateur de service (DK) enregistré.

9. Dispositif selon la revendication 7 ou 8,
**caractérisé en ce que**
la règle d'analyse (Règle_IN) tient compte d'une importance de l'indicateur de service (DK) enregistré pour un autre traitement ultérieur.

10. Dispositif selon l'une quelconque des revendications 1 à 9,
**caractérisé en ce que**
l'unité de traitement de services (4) commande le traitement du service chargé en fonction d'un résultat d'analyse de l'unité d'analyse (7) d'indicateur de service.

11. Procédé pour la facturation de services dans un réseau intelligent comprenant les étapes suivantes :
a) identification et mémorisation d'un service prédéfini avec un indicateur de service (DK) dans une unité de mémoire (5) ;
b) demande (D_REQ) du service prédéfini par le réseau intelligent ;
c) chargement du service demandé à partir de l'unité de mémoire (5) ;
d) traitement du service chargé dans une unité de traitement de services (4) ;
e) enregistrement de l'indicateur de service (DK) correspondant au service traité, et
f) analyse de l'indicateur de service (DK) enregistré pour la détermination d'une facturation pour le service traité.

12. Procédé selon la revendication 11,
**caractérisé en ce que**
le chargement du service demandé représente un chargement d'un code de programme exécutable.

13. Procédé selon la revendication 11 ou 12,
**caractérisé en ce que**
le service (54) chargé à partir de l'unité de mémoire présente une pluralité de services inférieurs (DL1), services annexes (DM1) et/ou services supérieurs (DN1) classés au plan hiérarchique avec des indicateurs de service correspondants (DKI, DKm, DKn).

14. Procédé selon l'une quelconque des revendications 11 à 13,
**caractérisé en ce que**
l'enregistrement des indicateurs de service représente un comptage respectif d'indicateurs de service identiques après l'exécution du service.

15. Procédé selon la revendication 14,
**caractérisé en ce que**
l'analyse des indicateurs de service représente une évaluation des relevés de compteurs respectifs en fonction de règles d'analyse (Règle_IN) internes et/ou externes pour le calcul de la valeur de taxe.

16. Procédé selon l'une quelconque des revendications 11 à 15,
**caractérisé par** l'autre étape :
g) commande du traitement du service chargé en fonction du résultat dans l'étape f).
